# EUROPEAN PATENT APPLICATION

(11) **EP 3 829 087 A1**
(43) Date of publication of application: **02.06.2021**
(21) Application number: 20203082.1
(22) Date of filing: 21.10.2020
(51) Int. Cl.: H04K 3/00

(54) **METHOD AND SYSTEM OF PROVIDING AT LEAST ONE SIGNAL AS WELL AS TEST AND MEASUREMENT SYSTEM FOR ROBUSTNESS TESTING OF A SIGNAL RECEIVER**

(30) Priority: 29.11.2019 DE 102019008339
(71) Applicant: Rohde & Schwarz GmbH & Co. KG, 81671 München (DE)
(72) Inventor: Sterzbach, Bernhard, 81671 München (DE)
(74) Representative: Prinz & Partner mbB

(57) **Abstract**

A method of providing at least one signal, particularly a superimposing test signal, comprises the following steps:
- Generating at least a first signal to be emitted to an object,
- Distributing the first signal to at least two different senders (22) located at different positions,
- Adjusting the first signal by each of the senders (22) depending on the relative orientation and/or position of the respective sender (22) to the object, thereby generating individual signals, and
- Emitting the individual signals towards the object by means of each sender (22) in order to affect the object by a superposed signal of the individual signals, which is obtained at the position of the object, wherein each of the individual signals itself is insufficient to affect the object.

Further, a system (18) for providing at least one signal as well as a test and measurement system (10) for testing robustness of a signal receiver (16) are described.

## Description

The invention relates to a method and system of providing at least one signal. Further, the invention relates to a test and measurement system for testing the robustness of a signal receiver.

In the past, aerial drones, for instance private controlled ones, become an increasing problem at airports, as they might disturb the operating processes at the airports. The aerial drones may penetrate the respective airspace, endangering airplanes during landing and/or take-off.

Further, using those aerial drones is also forbidden at other public places for security reasons. For instance, it is not allowed to operate aerial drones in an airspace assigned to an audience of an open-air concert, a festival or the like.

Typically, aerial drones are controlled by radio signals received from radio transmitters that emit the respective radio signals. However, modern aerial drones may also be controlled by global navigation satellite system (GNSS) signals, for instance signals that relate to the Global Positioning System (GPS) or the European counterpart system that is called Galileo. Other GNSS signals relate to the Russian GLObal NAvigation Satellite System (GLONASS) and Chinese system that is called BeiDou.

In any case, a modern aerial drone corresponds to a signal receiver for the respective signals emitted by at least one signal emitter of the respective type, for instance a GNSS signal emitter such as a satellite.

As mentioned above, operating aerial drones is restricted and, thus, it might be important to prevent the operation of these aerial drones at certain areas. Typically, this is done by jamming the respective GNSS signals by means of chirp signals having relatively high power in order to superimpose the GNSS signals such that the respective signal receiver, namely the aerial drone, receives the jamming signal.

This concept can be used at stationary areas such as airports since the systems for jamming the GNSS signals require a lot of power, which in turn requires respective facilities in order to provide the power necessary. However, open-air concerts or other public events such as festivals may take place at locations that do not have the respective facilities necessary for operating the systems known in the state of the art.

In addition, besides the devices not allowed to be operated at certain areas such as third-party aerial drones, other devices shall be operated which, however, use the same kind of signals, for instance GNSS signals. Hence, it is also important that those devices are robust against jamming or rather not affected (disturbed or rather jammed) by the signal used for disturbing the respective device.

Moreover, the devices permitted to be operated in the respective area are typically tested previously with respect to their robustness against jamming signals by means of a test and measurement system. Typically, these test and measurement systems provide at least one signal, particularly a wanted signal and a test signal that superimposes the wanted signal, in order to verify how robust the respective device is against jamming.

Hence, there is a need for a method and a system, which ensure that only devices permitted are operated in a certain area in an efficient manner.

The invention provides a method of providing at least one signal, particularly a superimposing test signal, comprising the following steps:
- generating at least a first signal to be emitted to an object,
- distributing the first signal to at least two different senders located at different positions,
- adjusting the first signal by each of the senders depending on the relative orientation and/or position of the respective sender to the object, thereby generating individual signals, and
- emitting the individual signals towards the object by means of each sender in order to affect the object by a superposed signal of the individual signals, which is obtained at the position of the object, wherein each of the individual signals itself is insufficient to affect the object.

Further, the invention provides a system for providing at least one signal, comprising at least one waveform processor and two different senders located at different locations. The waveform processor is configured to create at least one signal to be emitted by means of the senders to an object. The senders are assigned to the waveform processor such that the signal created is distributed to the senders. The senders are configured to adjust the signal created depending on the relative orientation and/or position of the respective sender to the object, thereby generating individual signals. The senders are configured to emit the individual signals towards the object in order to affect the object by a superposed signal of the individual signals, which is obtained at the position of the object, wherein each of the individual signals itself is insufficient to affect the object.

The invention is based on the idea that the object is only affected in case of multiple generated signals, namely the individual signals, that intersect with each other at the position of the object. Hence, a focused signal is obtained at the position of the object, namely the superposed signal. This ensures that only the object at its respective position is affected by the superposed signal, but other devices nearby are unaffected since the individual signals themselves are each insufficient to affect the object or any other devices in the neighborhood of the object. In other words, the affecting of the object is restricted to a small area in order to avoid to disturb other devices or systems that are not intended to be affected. Accordingly, a constructive superposition of the individual signals is obtained only at the position of the object.

Generally, affecting a device or system may relate to disturbing the respective device, particularly its communication with a respective signal emitter.

The adjustment of the signal generated, which results in the individual signals, may relate to adapting the phase and/or angle of the signal generated. Hence, the respective signal may be delayed or emitted at another point in time, particularly earlier. This generally may depend on the temporal evolution of the respective distance of the respective sender to the object.

In fact, the time of arrival of the individual signals is a function that depends on the distance of the respective sender to the object to be affected. Therefore, the orientation and/or position of the respective sender to the object are/is taken into account when adjusting the respective signal.

In other words, multiple signals, namely the individual signals, are transmitted from different locations by means of the different senders that point at the object to be affected.

Each of these individual signals is, on its own, insufficient to affect the object. However, the individual signals are constructed or rather created such that they add up or rather superimpose with each other to a superposed signal that affects the object when received together by the object.

This, however, only occurs at the intersection point of all the individual signals. Therefore, the intersection point coincidences with the position of the object. The respective senders are controlled such that their individual signals intersect with each other at the position of the object to be affected.

In other words, the combined signal obtained from the individual signals of all senders is sufficient to affect the object at its respective position even though the respective individual signal from each single sender is insufficient to affect the object. This ensures affecting/disturbing the object to be affected without disturbing/affecting any other devices.

The respective receiver may be overdriven when receiving the superposed signal of the individual signals.

Generally, the superposed signal may be used to disturb the communication between a respective signal emitter, for instance a satellite, and a corresponding signal receiver, namely the object to be affected.

In other words, the method and the system each provide a signal, namely the superposed signal, which is used for effectively disturbing a global navigation satellite system signal, namely at least one signal emitted by a global navigation satellite system signal emitter, for instance a satellite, for being received by a signal receiver, namely the object to be affected.

The respective signal provided by the system generally relates to a disturbing signal, which may correspond to a jamming signal or rather a spoofing signal.

For instance, each sender has at least one antenna, particularly a directional antenna pointing at the object. Hence, the individual signals can be focused on the object in an appropriate manner.

Generally, the superposed signal obtained by the different individual signals relates to an ongoing, consistent signal that has a disturbing effect on the object.

In fact, it is ensured that GNSS signals are only disturbed, for instance spoofed or rather jammed, in a limited area assigned to the position of the object to be affected.

For example, the GPS reception of a rogue drone is disrupted without impacting other GPS users in the vicinity.

An aspect provides that the individual signals emitted by each sender superimpose with each other at the position of the object in a constructive manner. Thus, the individual signals add up at the position of the object such that the resulting signal, namely the superposed signal, has sufficient power to affect the object when received together by the object. In other words, a strong signal, for instance a signal with high power (density), is obtained at the position of the object while combining several weak signals, namely the individual signals, in a constructive manner.

According to another aspect, the individual signals are emitted simultaneously and/or subsequently, namely alternated in time. The individual signals are emitted such that the intended effect is achieved at the position of the object, namely disturbing or rather affecting the object. Typically, this depends on the number of senders used. In case of only two senders, the individual signals are typically emitted simultaneously. However, this also depends on the respective power (density) or rather strength of the respective signal. In case of more senders, certain individual signals may be emitted simultaneously while other individual signals are emitted subsequently.

Generally, the individual signals may be adjusted such that they have a portion of the original power of the signal created, namely the first signal. Accordingly, the adjustment of the first signal received by the respective senders may also relate to a power reduction.

The individual signals each may have a power of 50%. According to another example, a first individual signal may have a power of 20%, whereas a second individual signal has a power of 80%, resulting in 100% total power at the position of the object provided that both signals are emitted simultaneously.

In any case, each of the individual signals may have a power lower than 100% ensuring that the individual signals themselves are each insufficient to affect the object.

Moreover, a transmission interval for each individual signal may be set such that each of the individual signals do not exceed a threshold value of the object, wherein the superposed signal obtained exceeds the threshold value. Hence, the individual signals each is unable to affect the object (or any other device or system nearby), as the individual signals do not exceed the threshold value of the object. However, the superposed signal obtained at the position of the object exceeds the threshold value such that the object is affected.

The threshold value may relate to a duty cycle. Hence, each individual signal is transmitted in a corresponding time span below the respective threshold value. However, several individual signals are transmitted by different senders in a subsequent manner such that they together exceed the respective threshold value. Put differently, the senders are coordinated such that their individual signals emitted achieve a combined duty cycle above the threshold value.

Moreover, the threshold value may relate to a power level.

Generally, the threshold value may relate to the detection threshold. Thus, a signal not exceeding the threshold value cannot be detected by the respective object, namely the signal receiver.

Another aspect provides that the senders are synchronized with each other, ensuring that the individual signals emitted by the senders are synchronized with each other. The individual signals emitted by the different senders are in-phase at the position of the object due to the synchronization provided between the different senders. This ensures that a constructive superposition of the individual signals can be achieved in a controlled manner.

In fact, the respective individual signals are phase shifted depending on the relative position/orientation of the respective sender to the object to be affected, for instance when moving away.

According to a further aspect, information is gathered that comprises a scrambling and/or spreading code of at least one signal emitter, wherein the information is used to generate the first signal. Particularly, the first signal (as well as the superposed signal) simulates a respective signal of the first signal emitter. As mentioned above, the object to be affected may correspond to a signal receiver that communicates with a signal emitter, for instance a (GNSS) signal emitter. Accordingly, the (first or rather superposed) signal may correspond to a signal that is emitted by the respective signal emitter as the same scrambling code and/or spreading code are/is used. Put differently, the first signal is created according to the standards of the respective signal emitter while using the same scrambling and/or spreading code. Thus, the superposed signal provided at the position of the object superimposes with the respective signal of the signal emitter.

As the superposed signal has the same scrambling and/or spreading code as a respective signal emitted by the global navigation satellite system signal emitter, for instance the respective satellite of the system, a certain signal receiver to be disturbed, namely the object to be affected, synchronizes with the superposed signal. Thus, the signal receiver loses communication with the respective GNSS signal emitter. Put differently, the superposed signal disturbs the communication between the signal emitter and the signal receiver, namely the object, while superseding the previously established communication link between the signal emitter and the signal receiver.

Since the same scrambling and/or spreading code is used, it is ensured that disturbing takes place after de-spreading. In contrast thereto, chirp signals disturb communication prior to de-spreading. Since the jamming takes place after de-spreading, a higher efficiency is obtained even though the same radio frequency (RF) power is used. Put differently, the same efficiency can be obtained while using the signal with less RF power. Hence, the respective system does not require the respective facilities for providing high RF power.

The information gathered may be provided automatically and/or by an operator, particularly by means of a user interface of the system. For instance, the system comprises a receiver that receives the respective signal of the signal emitter in order to analyze the signal and, thereby, obtaining the scrambling and/or spreading code used.

Further, information of the locations of the different senders as well as the position of the object may be used in order to adjust the first signal generated such that the individual signals are obtained, which are emitted by the different senders.

In other words, the real phase of a respective signal of the signal emitter at the position of the object may be known. The information about the real phase may be used for adjusting the first signal. Moreover, the distance between each sender and the object may be known and used for adjusting the first signal in order to create the individual signals for each sender. This information can be used to adjust the first signal in an appropriate manner and, thus, creating the individual signals for each sender.

Generally, the object may relate to a signal receiver that interacts with the respective signal emitter.

Accordingly, the first signal and, therefore, the superposed signal each simulate a respective signal of the signal emitter. As discussed above, the first or rather superposed signal may relate to a respective global navigation satellite system signal that is emitted by the first global navigation satellite system signal emitter, namely the respective satellite. This ensures that the signal emitted by other real global navigation satellite system signal emitters is superimposed by the superposed signal, namely the signal affecting the object, such that the signal receiver synchronizes with the superposed signal instead of the global navigation satellite system signal.

Moreover, the first signal may have pseudo noise or wrong information as payload. The pseudo noise results in no valid information, for instance no valid position information, which cannot be processed by the object. Hence, the object is disturbed, which is also called jammed by means of the system. In other words, the payload of the first or rather superposed signal is pseudo noise such that no (useful or rather valid) information is transmitted by means of the first or rather superposed signal. This means that neither correct information nor any incorrect information is transmitted by the first or rather superposed signal since only pseudo noise (content) is provided.

In contrast thereto, the wrong information corresponds to valid information even though the wrong information may provide wrong position information such that a spoofing of the object may take place when affecting the object. In fact, the position of the object is known such that the wrong information provided can be updated on a regular basis.

Particularly, the wrong information is determined based on information received from the signal emitter communicating with the object. As mentioned above, the system may have a receiver for receiving the respective signal of the signal emitter. Thus, information can be gathered from the respective signal received in order to determine the wrong information based on the information received from the signal emitter communicating with the object.

Another aspect provides that a second signal is generated that uses the same scrambling and/or spreading code as a second signal emitter. Thus, the communication via another signal link, namely the second signal, can be disturbed by means of the method or rather the system.

Thus, a second disturbing signal may be provided that uses the same scrambling and/or spreading code as the second global navigation satellite system signal emitter, namely a second satellite. Similar to the first signal, the second signal is created according to the standards of the respective signal emitter, namely the second signal emitter, while using the same scrambling and/or spreading code. However, the payload of the signal may be pseudo noise such that no (useful) information is transmitted by means of the second signal. This means that neither correct information nor any incorrect information is transmitted by the second signal since only pseudo noise (content) is provided by the second signal.

The second signal may also disturb the communication between the second signal emitter, namely the one which scrambling and/or spreading code is used, and the corresponding signal receiver, namely the object to be affected. Thus, the second signal emitter may also relate to a global navigation satellite system (GNSS) signal emitter, particularly a satellite.

Generally, if the signal receiver does not obtain any usable information, for instance due to the payload relating to pseudo noise, the signal receiver will discard the real signal emitter, particularly from an internal list of possible or rather available signal emitters. Typically, the signal receiver switches to another signal emitter, particularly on the internal list. However, if the communication with the second signal emitter is also disturbed, the signal receiver also discards the second real signal emitter and so on.

As the disturbing signals have the same scrambling and/or spreading code as the signals emitted by the global navigation satellite system signal emitters, for instance the respective satellites of the system, the signal receiver to be disturbed synchronizes with the disturbing signals, namely the superposed signals, and, thus, loses communication with the respective GNSS signal emitters. Put differently, the signals emitted disturb the communication between the respective signal emitters and the signal receiver, namely the object to be affected.

Generally, the individual signals obtained from the first signal as well as the individual signals obtained from the second signal are emitted during preconfigured time slots ensuring that the object, namely the signal receiver, receives the superposed signals of the respective individual signals for certain time periods. Typically, the signal receiver switches from the first signal emitter to the second signal emitter in case of not receiving a valid signal from the first signal emitter after a certain time that corresponds to the respective time slot.

As the first signal (and the associated superposed signal) comprises pseudo noise as payload, the signal receiver will not receive a valid signal and, thus, the signal receiver will switch to the second signal emitter. As the second (and the associated superposed signal) signal also comprises only pseudo noise as payload, the superposed signal associated with the second signal is also deemed to be invalid such that the real second signal emitter is discarded.

Typically, the signal receiver, namely the object to be affected, may cancel or rather discard the respective signal emitter from an internal list of available signal emitters provided that the signal receiver does not receive a valid signal from the respective signal emitter. Hence, providing (disturbing) signals having the same scrambling and/or spreading code as the signals emitted by the respective real signal emitters while simultaneously having pseudo noise as respective payload ensures that the list of available signal emitters is reduced, which is used by the signal receiver for establishing a communication link.

Typically, the individual signals associated with the first signal and the second signal are emitted subsequently. Particularly, the individual signals associated with the second signal are emitted after the first preconfigured time slot has expired in which the individual signals associated with the first signal were emitted.

The respective preconfigured time slots, namely the first and the second preconfigured time slots, may have the same length or different lengths.

Furthermore, several different signals, namely individual signals associated with different signals, may be emitted, particularly in a cyclic manner. The several different signals relate to several different signal emitters that may establish a communication with the signal receiver.

As the individual signals associated with each single signal generated are emitted for a preconfigured time slot, the individual signals associated with the first signal may be emitted for the second time after the individual signals associated with the last signal, namely the one assigned to the last signal emitter, were emitted previously for its respective preconfigured time slot. Accordingly, the individual signals associated with the different signals may be emitted in a cyclic manner, as the several different signals are repeated in their respective order.

Generally, this ensures that a re-synchronization of the signal receiver with one of the different signal emitters can be avoided effectively. As discussed above, the signal receiver tries to identify a valid content of one of the several signal emitters.

As the signal receiver receives only pseudo noise (content) when receiving the respective signals, the signal receiver will try to use another signal emitter and switches to the next one for establishing a communication link.

Moreover, the signal receiver may discard one signal emitter after another if the signal receiver does not receive a valid signal after a certain number of attempts, for instance two attempts, three attempts or another number of attempts.

In general, each of the individual signals associated with the certain signals generated is insufficient to affect the signal receiver, namely the object. However, the individual signals associated with a certain signal superimpose with each other at the position of the object, particularly in a constructive manner, in order to provide the superposed signal at the position of the object that affects the signal receiver, namely the object.

A further aspect provides that signals of different types are generated, wherein the signals of different types are assigned to at least two different types of signal emitters. For instance, GNSS signal emitters may relate to GPS, Galileo, GLONASS and/or BeiDou that are different types of signal emitters. As the signals of different types are generated (and the individual signals associated therewith are emitted), it is ensured that a signal receiver cannot choose between different types of signal emitters, namely different systems, in order to establish a communication link with the respect of signal emitter.

Particularly, individual signals associated with the signals of different type are emitted in a common time slot. Hence, the signals of different signal emitters may be superimposed simultaneously by means of the method or rather the system. As the signals of different type distinguish from each other, for instance by means of the scrambling and/or spreading code as well as other characteristics, it is possible to emit individual signals of different type simultaneously, as they do not interfere with each other. Thus, it can be avoided effectively that the signal receiver uses a different type of signal emitter.

In addition, at least the first signal may be used to test robustness of a signal receiver by superimposing a wanted signal for the signal receiver with the superposed signal associated with the first signal. Hence, the first signal may be distributed to the senders and adapted such that the corresponding individual signals are obtained. These individual signals point to the position of the signal receiver, particularly its position. At the position of the signal receiver, the individual signals are added up with each other such that the superposed signal is obtained at the position of the signal receiver. The superposed signal superimposes with the wanted signal at this position so as to test robustness of the respective signal receiver against disturbing. In fact, it is verified whether or not the signal receiver withstands the superposed signal associated with the first signal.

In other words, the at least one signal, namely the first signal, relates to a test signal that is used to test the robustness of the signal receiver.

In general, the respective signals of the signal emitters, namely GNSS signals, are simulated by means of the system. This means that the modulation and/or coding, for instance the scrambling and/or spreading code, are used according to the respective GNSS standard.

As already discussed, the individual signals themselves are each unable to affect the respective signal receiver, as only the combination of the individual signals at the position of the object, namely the signal receiver, ensures that the object is affected.

The waveform processor may generate a signal, for instance an IQ signal (in-phase and quadrature data). Based on the IQ signal or rather the IQ data, the signal to be emitted is generated by means of a high frequency modulator and/or an amplifier.

Generally, each of the senders may have an antenna, in particular a directional antenna. Accordingly, the individual signals are emitted via the antennas. The directional antennas ensure that the signals may point towards the object.

The system may comprise a receiving antenna for receiving a signal of the at least one signal emitter and/or a user interface enabling an operator of the system to input information. Hence, the respective information required for adapting the signal generated can be obtained in different ways.

Moreover, the invention relates to a test and measurement system for testing robustness of a signal receiver, wherein the test and measurement system comprises the system as described above. The test and measurement system may comprise a device under test that is established by the signal receiver. The test and measurement system may comprise a testing chamber, for instance an anechoic chamber in which the device under test is placed for testing purposes. The system creates and emits the at least one signal for testing the robustness of the device under test, particularly a certain signal receiver to be tested.

The invention is now described with reference to preferred embodiments, which are shown in the enclosed drawings. In the drawings,
- Figure 1 shows a schematic overview of a test and measurement system according to the invention, which uses a system for providing at least one signal according to the invention,
- Figure 2 shows a schematic overview of a system for providing at least one signal according to the invention,
- Figure 3 shows a flow-chart illustrating a method of providing at least one signal according to the invention, and
- Figure 4 shows a schematic sketch illustrating the superimposing of the individual signals.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

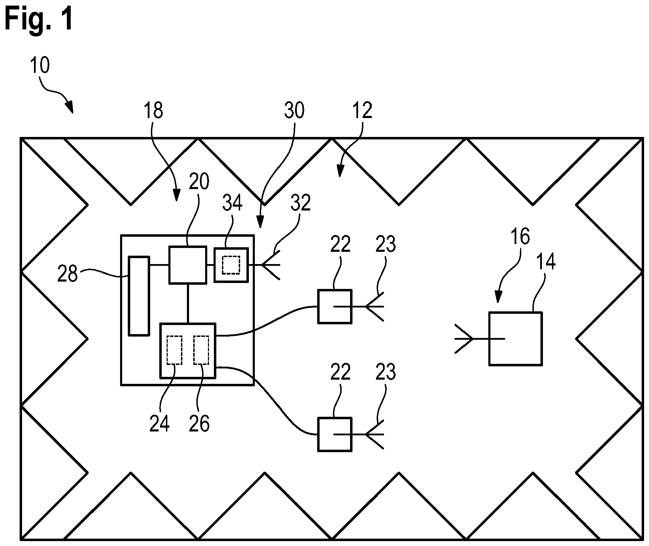

In Figure 1, a test and measurement system 10 for testing robustness of a signal receiver is shown. The test and measurement system 10 comprise a testing space 12 in which a device under test 14, generally called object, is located that is to be tested.

In the shown embodiment, the testing space 12 relates to a testing chamber, namely an anechoic chamber.

Further, the device under test 14 corresponds to a signal receiver 16 that usually communicates with a signal emitter such as a GNSS signal emitter. The robustness of the signal emitter 16 can be tested by means of the test and measurement system 10 as will be described later.

The test and measurement system 10 further comprises a system 18 for providing at least one signal that is emitted by the system 18 and received by the signal receiver 16, namely the device under test 14, in order to test its robustness.

The system 18 comprises a waveform processor 20 as well as two different senders 22 that are located at different locations (within the testing space 12) as shown in Figure 1.

The senders 22 each comprise an antenna 23, in particular a directional antenna pointing towards the device under test 14 or rather the signal receiver 16.

In general, the waveform processor 20 is configured to create or rather generate at least one signal, hereinafter also called first signal.

The senders 22 are assigned to the waveform processor 20, particularly connected with the waveform processor 20 in a signal-transmitting manner at least indirectly, such that the signal generated by means of the waveform processor 20 is forwarded or rather distributed to the senders 22.

The different senders 22 are configured to adjust the signal received depending on information concerning the relative orientation and/or position of the respective sender 22 to the device under test 14 or rather the signal receiver 16.

By adjusting the respective signal received, the different senders 22 each generate an individual signal to be emitted towards the device under test 14 or rather the signal receiver 16, namely the object.

In fact, the phase and/or angle of the individual signals to be emitted by the respective senders 22 may be adjusted due to the relative orientation and/or position of the respective sender 22 with respect to the device under test 14.

Then, the senders 22 emit the individual signals, namely the signals obtained after adjusting the signal received from the waveform processor 20, towards the device under test 14.

The respective individual signals emitted by the different senders 22 superimpose with each other in a constructive manner at the position of the device under test 14 to a superposed signal.

The superposed signal ensures that the device under test 14 is affected or rather disturbed such that the robustness of the device under test 14 against such a disturbing signals can be tested.

However, each of the individual signals itself is insufficient to affect the device under test 14 due to its characteristics, particularly its power (density). Hence, no impact on neighbored measurement equipment, systems or devices take place.

As mentioned above, the individual signals emitted by each sender 22 superimpose with each other only at the position of the device under test 14 in a constructive manner, resulting in the superposed signal.

Generally, the superposed signal exceeds a threshold value of the device under test 14 such that the device under test 14 may detect or rather receive the superposed signal.

The individual signals themselves may not exceed the threshold value of the device under test 14. Accordingly, the device under test 14 even would not notice an impinging individual signal, but only the superposed signal obtained by the intersecting individual signals at the position of the device under test 14.

As mentioned above, this ensures that the individual signals do not disturb any other devices or systems that are located outside of the position of the device under test 14, as the individual signals intersect with each other only at the position of the device under test 14 so as to add up there. The different senders 22 are controlled by the system 18 in an appropriate manner.

The individual signals may be emitted simultaneously or subsequently, which depends on the respective scenario intended in order to affect the device under test 14 and/or the number of senders 22. Typically, the individual signals may are emitted simultaneously in case of a lower number of senders 22, particularly if only two different senders 22 are provided.

However, the senders 22 may also be coordinated such that their individual signals emitted achieve a combined duty cycle above the threshold value of the device under test 14, namely the signal receiver 16, while the individual signals would not exceed the threshold value.

Generally, the senders 22 are synchronized with each other such that the individual signals emitted by the senders 22 are synchronized with each other at the position of the device under test 14. Thus, a relative movement can be considered by providing an appropriate phase shift.

Furthermore, the waveform processor 20 is configured to create the respective first signal based on information gathered previously.

The information gathered may comprise at least a scrambling and/or spreading code of at least one signal emitter that typically communicates with the device under test 14, namely the signal receiver 16. In fact, the information gathered is used to generate the respective signal such that the signal generated simulates a respective signal of the signal emitter that typically communicates with the signal receiver 16.

Generally, the at least one signal is created by means of the waveform processor 20 such that the first signal generated has pseudo noise as payload. Put differently, the at least one signal generated does not have any valid information that can be processed by the device under test 14, namely the signal receiver 16 to be tested. In fact, the payload does not even comprise false information provided that pseudo noise is used as the payload.

Accordingly, the waveform processor 20 may relate to an arbitrary waveform processor as GNSS signals with simple pseudo noise (content) may be generated by means of the waveform processor 20.

Alternatively, the waveform processor 20 creates the at least one signal, namely the first signal, such that the signal has wrong information as payload. The wrong information may relate to a wrong position information such that the device under test 14 can be tested with respect to spoofing robustness.

The signal created by the waveform processor 20 is forwarded to an amplifier 24 and a high frequency in modulator 26 prior to being forwarded to or rather distributed among the senders 22 that are assigned to the waveform processor 20.

Thus, the higher frequency modulator 26 as well as the amplifier 24 are positioned between the waveform processor 20 and the senders 22.

Thus, the signal is modulated to a high frequency and amplified such that the test signal provided by the test and measurement system 10, particularly system 18, corresponds to a realistic signal that would be generated by the signal emitter simulated.

The respective information used by the waveform processor 20 for creating the at least one signal may be inputted via a user interface 28 of the system 18 that enables an operator of the system 18 to input the respective information for creating the at least one signal.

Alternatively, the system 18 may comprise a receiver 30 via which real signals of a real signal emitter are received and analyzed.

The respective real signals may be received from the at least one signal emitter with which the device under test 14, namely the signal receiver 16, typically communicates. For this purpose, the receiver 30 comprise a receiving antenna 32 and an analyzing module 34 assigned thereto in order to receive signals from the signal emitter(s) and to analyze these signals appropriately.

The information gathered can be used for creating the at least one signal in an automatic manner.

Generally, the waveform processor 20 may generate different signals, namely a first signal and at least a second signal, that are distributed among the senders 22 for testing the robustness of the device under test 14.

In a similar manner, the second signal generated uses the same scrambling and/or spreading code as a second signal emitter that is simulated. Accordingly, the robustness of the device under test 14 with respect to disturbing communication with different signal emitters can be tested efficiently.

In addition, signals of different types are generated by means of the waveform processor 20, wherein the signals of different types are assigned to at least two different types of signal emitters. Accordingly, different GNSS standards may be simulated so as to test the robustness of the device under test 14 with regard to disturbance of different GNSS standards.

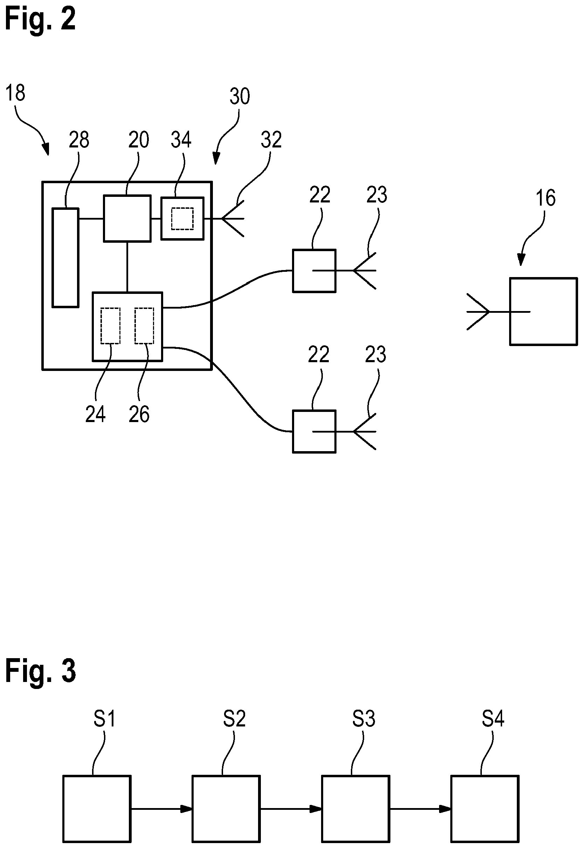

In Figure 2, the system 18 is shown separately from the test and measurement system 10.

The system 18 may be used in field application for disturbing signals emitted by (different) signal emitters, particularly GNSS signal emitters such as satellites, and to be received by a certain object, for instance a signal receiver such as a device communicating with the GNSS signal emitters or rather satellites.

Accordingly, the system 18 can be used to disturb satellite communication between a certain signal emitter, namely a satellite, as well as a respective signal receiver.

In general, the system 18, particularly the one shown in Figure 2 as well as the system 18 of the test and measurement system 10, is configured to perform a method as shown in Figure 3.

In a first step S1, at least a first signal to be emitted to an object is generated, for instance the device under test 14 or rather a signal receiver. Particularly, the signal is generated by means of the waveform processor 20.

The waveform processor 20 may generate the first signal such that the signal uses the same scrambling and/or spreading code as a respective signal emitter that typically communicates with the object to be affected.

In addition, the waveform processor 20 may generate the first signal such that the first signal has pseudo noise as payload, which relates to jamming. Accordingly, neither true information nor any false information is transmitted by the first signal, but pseudo noise. Thus, the content of the first signal may be static. An arbitrary waveform may be provided for the first signal accordingly.

Alternatively, the waveform processor 20 may generate the first signal such that the first signal has false information as payload, which relates to a valid information, but a wrong one. Typically, this relates to spoofing.

Accordingly, the signal generated by means of the waveform processor 20 may have pseudo noise or wrong information as payload in order to disturb the respective communication between the signal emitter and the object, for instance to disturb the satellite communication between a satellite and the signal receiver 16 communicating with the satellite.

In a second step S2, the first signal is distributed to the at least two different senders 22 located at the different positions.

Previously, the respective signal generated is processed by the amplifier 24 and/or the high frequency modulator 26 in order to amplify or rather modulate the respective signal prior to distributing the respective signal to the senders 22.

In a third step S3, the first signal is adjusted by each of the senders 22 depending on the relative orientation and/or position of the respective sender 22 to the signal receiver 16, thereby generating individual signals. The adjustment of the first signal resulting in the individual signals may relate to adapting the phase and/or angle of the first signal with regard to the distance of the respective sender 22 to the signal receiver 16.

Particularly, the time of arrival of the different individual signals due to the different relative positions/orientations is taken into account when adjusting the respective signal generated in order to obtain the individual signals.

Further, the individual signals may be adjusted such that they have a portion of the original power of the signal generated by the waveform processor 20, namely the first signal. Accordingly, the adjustment of the first signal received by the respective senders 22 may relate to a power reduction. For instance, two senders 22 may provide individual signals each having a power of 50% of the originally signal generated by means of the waveform processor 20. Different powers of the individual signals are also suitable.

In any case, each of the individual signals may have a power lower than 100% of the originally signal generated by means of the waveform processor 20, ensuring that the individual signals themselves are each insufficient to affect the object.

Moreover, the duty cycle of the individual signals may be adapted when adjusting the signal generated in order to obtain the individual signals.

In a fourth step S4, the individual signals are emitted towards the signal receiver 16 by means of each sender 22 in order to affect the signal receiver 16 by a superposed signal of the individual signals. The superposed signal is obtained at the position of the signal receiver 16, as the individual signals intersect with each other exactly at this specific position.

However, each of the individual signals itself is insufficient to affect the signal receiver 16. Accordingly, it is ensured that devices intended to communicate with the respective signal emitter are not disturbed by the method or rather system 18, as the effect of disturbing the communication is focused on the position of the signal receiver 16.

The signal receiver 16, for instance the one of the test and measurement system 10 or rather a signal receiver in a field such as a drone, receives the superposed signal associated with the first signal, which uses the same scrambling and/or spreading code as a first signal emitter that typically communicates with the respective signal receiver 16.

For instance, the superposed signal associated with the first signal simulates a signal of a first satellite wherein the communication of the first satellite shall be disturbed by means of the system 18.

Since the superposed signal has pseudo noise as payload, the signal receiver 16 receives information that however is invalid. Put differently, the payload has neither true nor false information and, thus, the information is deemed to be invalid by the signal receiver 16.

Accordingly, the signal receiver 16 processes the pseudo noise (content) received via the respective signal after de-coding while gathering no meaningful information from the payload of the respective signal.

As the information is invalid, the signal receiver 16 cannot process the information obtained by the first signal in a meaningful manner.

Therefore, the signal receiver 16 will switch from the first signal emitter, namely the first GNSS signal emitter, to a second signal emitter, namely a second GNSS signal emitter, while attempting to establish a communication in order to receive valid information from the second signal emitter.

Typically, the signal receiver 16 switches from the first signal emitter to the second signal emitter after a certain period of time. This period of time may correspond to a first preconfigured time slot during which the superposed signal associated with the first signal is emitted by the system 18.

In fact, it was verified previously how long the respective signal receiver 16 tries to establish a communication with a certain signal emitter. The period of time is determined and stored in the system 18 such that the system 18 emits the respective individual signals together establishing the superposed signal for the certain period of time.

Accordingly, the system 18, particularly its waveform processor 20, creates the first signal for the first preconfigured time slot wherein the individual signals are emitted that together provide the superposed signal at the position of the signal receiver 16.

After the first preconfigured time slot, the system 18, particularly the waveform processor 20, generates a second signal that is different to the first signal.

Put differently, the system 18 changes the signal(s) when the signal receiver 16 tries to establish a communication with the second signal emitter instead of the first signal emitter.

The second signal uses the same scrambling and/or spreading code as the second signal emitter to which the signal receiver 16 has switched for establishing the respective communication.

In addition, the second signal also has pseudo noise as payload such that no valid information is received by the signal receiver 16.

In a similar manner as discussed above with respect to the first signal, the second signal is also created by means of the waveform processor 20 wherein associated individual signals are obtained by adjusting the respective second signal. These individual signals are emitted by means of the different senders 22 located at different positions during a second preconfigured time slot.

Hence, the signal receiver 16 attempting to establish a communication with the second signal emitter receives a second superposed signal associated with the second signal generated by the waveform processor 20 instead of a true signal of the second signal emitter.

Again, the signal receiver 16 tries to establish the communication for a certain period of time that corresponds to a second preconfigured time slot during which the second signal is generated by the system 18.

After the certain period of time, the signal receiver 16 switches to another signal emitter, namely a third one, in order to receive valid information from the third signal emitter.

However, the system 18 also creates another signal, namely a third one, in order to disturb communication of the signal receiver 16 with the third signal emitter in a similar manner. Again, the third signal also comprises the same scrambling and/or spreading code as the third signal emitter while having pseudo noise as payload. Thus, the signal receiver 16 will also have to switch to another signal emitter for establishing a communication.

This procedure repeats in a cyclic manner for all signal emitters available for the signal receiver 16.

However, the information gathered at the beginning comprises information of all signal emitters available, particularly the number of signal emitters available as well as the scrambling and/or spreading code of the signal emitters.

Moreover, the information gathered at the beginning comprises information of the locations of the different senders 22 as well as the position of the signal receiver 16 in order to adjust the respective signal(s) generated such that the individual signals are obtained appropriately. The respective individual signals generated are emitted by the different senders 22.

The information gathered may also comprise the true phase of the respective signal of the respective real signal emitter at the position of the signal receiver 16 in order to adjust the signal generated by means of the waveform processor 20 appropriately.

Moreover, the information gathered may comprise the distance between each sender 22 and the signal receiver 16 in order to adjust the signal generated by means of the waveform processor 20 so as to create the individual signals for each sender 22.

Put differently, the system 18 is enabled to create and to emit several different signals, each having the same scrambling and/or spreading code as a respective signal emitter wherein the different signals each have pseudo noise as payload.

The respective signals created are emitted in respective preconfigured time slots that correspond to the periods of time the signal receiver 16 tries to establish a communication with the respective signal emitters.

Accordingly, it is ensured that the signal receiver 16 is not able to establish a valid communication with one of the several signal emitters that are available and intended for communication. Put differently, the system 18 may avoid a valid communication between the signal receiver 16 and any of the signal emitters. Thus, the system 18 effectively disturbs or rather jams communication of the signal receiver 16 and the signal emitter(s) available.

The signal receiver 16 may try to establish a communication with any of the signal emitters for several times.

Accordingly, the system 18 creates and emits the different signals in a cyclic manner in order to avoid a re-synchronization with any of the signal emitters during a second or further attempt.

The signals may be created and emitted in a cyclic manner in the same order or another order used by the signal receiver 16.

After one or several attempts of establishing a communication with a certain signal emitter, the signal receiver 16 typically cancels/discards the respective signal emitter from an internal list of available signal emitters. Afterwards, the signal receiver 16 will not try to establish a communication with the respective signal emitter anymore.

As cancelling/discarding the respective signal emitter is done for each and every signal emitter available after a certain time, the signal receiver 16 is no more able to communicate with one of the several signal emitters.

Accordingly, the communication is disturbed or rather jammed effectively.

Alternatively, the waveform processor 20 may generate the signal such that the respective signal generated comprises wrong information as payload.

Accordingly, a spoofing instead of jamming is possible, as information deemed valid is transmitted even though the information is wrong.

Since the information gathered at the beginning comprises information of the locations of the different senders 22 as well as the position of the signal receiver 16, it is possible to provide wrong information to the signal receiver 16 in a continuous manner.

In any case, the system 18 provides several individual signals based on a signal generated by means of the waveform processor 20. The signal generated takes the respective communication link into account that shall be disturbed, as the scrambling and/or spreading code used by the communication link is taken into consideration

The individual signals are emitted to the signal receiver 16 so as to intersect at the position of the signal receiver 16 in a constructive manner. Thereby, the individual signals add up at the position of the signal receiver 16, as a constructive superimposing takes place.

Hence, the resulting superposed signal of the individual signals at the position of the signal receiver 16 ensures that the superposed signal is strong enough for being received by the signal receiver 16. Accordingly, the superposed signal obtained at the position of the signal receiver 16 ensures that the signal receiver 16 is affected, particularly disturbed, namely spoofed or rather jammed.

In contrast thereto, the individual signals are not able to affect or rather disturb the signal receiver 16.

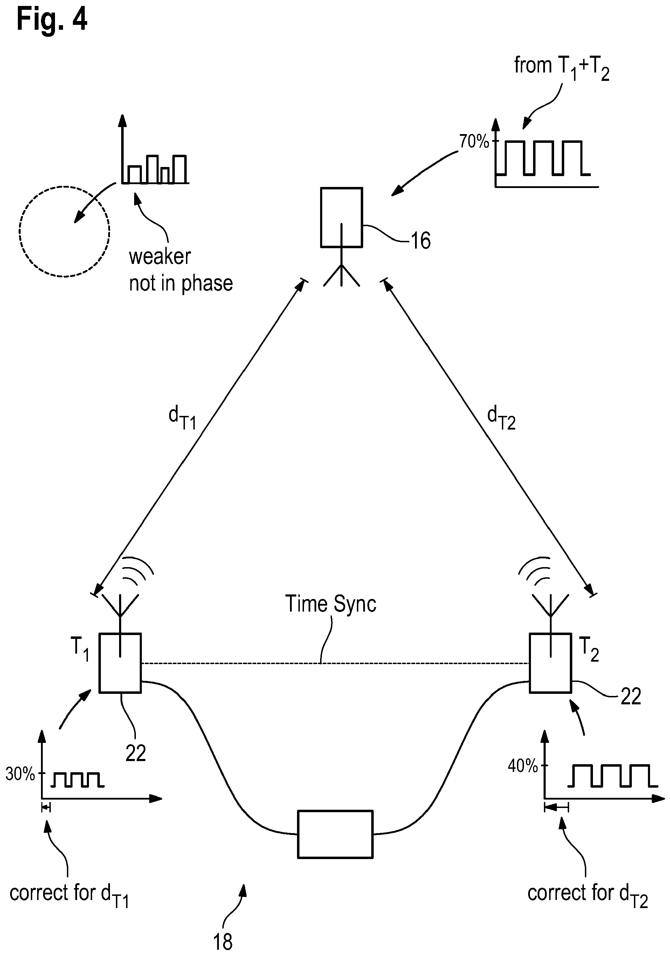

In Figure 4, superimposing two individual signals emitted by two different senders 22 is schematically shown.

A first sender 22, also labelled with T1, and a second sender 22, also labelled with T2, are synchronized with each other ("Time Sync"). Further, the distances of the individual senders 22 to the signal receiver 16 are known, which are labelled with d_{T1} and d_{T2}.

Depending on these distances, the time of arrival of the individual signals is different, which are corrected appropriately as schematically shown in Figure 4.

Moreover, Figure 4 reveals that the individual signals have different powers, namely 30% and 40%.

However, both individual signals are emitted towards the signal receiver 16 so as to add up at the position of the signal receiver 16 in a constructive manner. Hence, the individual signals are in phase at the position of the signal receiver 16 as shown in Figure 4 while the individual signals superimpose in the constructive manner to a superposed signal having a power of 70%.

As also indicated in Figure 4, the individual signals are only superimposing in a constructive manner within a small area assigned to the position of the signal receiver 16.

In fact, the individual signals are not in phase in a vicinity of the signal receiver 16. Moreover, the signals do not add up outside of the area assigned to the position of the signal receiver 16.

Accordingly, it is ensured that only the signal receiver 16 is affected, namely disturbed, without impairing devices/systems in its vicinity.

## Claims

1. A method of providing at least one signal, particularly a superimposing test signal, comprising the following steps:
- Generating at least a first signal to be emitted to an object,
- Distributing the first signal to at least two different senders located at different positions,
- Adjusting the first signal by each of the senders depending on the relative orientation and/or position of the respective sender (22) to the object, thereby generating individual signals, and
- Emitting the individual signals towards the object by means of each sender (22) in order to affect the object by a superposed signal of the individual signals, which is obtained at the position of the object, wherein each of the individual signals itself is insufficient to affect the object.

2. The method according to claim 1, **characterized in that** the individual signals emitted by each sender (22) superimpose with each other at the position of the object in a constructive manner.

3. The method according to claim 1 or 2, **characterized in that** the individual signals are emitted simultaneously and/or subsequently.

4. The method according to any of the preceding claims, **characterized in that** a transmission interval for each individual signal is set such that each of the individual signals do not exceed a threshold value of the object, wherein the superposed signal obtained exceeds the threshold value.

5. The method according to any of the preceding claims, **characterized in that** the senders (22) are synchronized with each other, ensuring that the individual signals emitted by the senders (22) are synchronized with each other.

6. The method according to any of the preceding claims, **characterized in that** information is gathered that comprises at least a scrambling and/or spreading code of at least one signal emitter, wherein the information is used to generate the first signal, in particular wherein the first signal simulates a respective signal of the first signal emitter.

7. The method according to any of the preceding claims, **characterized in that** the first signal has pseudo noise or wrong information as payload.

8. The method according to claim 7, **characterized in that** the wrong information is determined based on information received from a signal emitter communicating with the object.

9. The method according to any of the preceding claims, **characterized in that** a second signal is generated that uses the same scrambling and/or spreading code as a second signal emitter.

10. The method according to any of the preceding claims, **characterized in that** signals of different types are generated, wherein the signals of different types are assigned to at least two different types of signal emitters, in particular wherein individual signals associated with the signals of different type are emitted in a common time slot.

11. The method according to any of the preceding claims, **characterized in that** at least the first signal is used to test robustness of a signal receiver (16) by superimposing a wanted signal for the signal receiver with the superposed signal associated with the first signal.

12. A system (18) for providing at least one signal, comprising at least one waveform processor (20) and two different senders (22) located at different locations, wherein the waveform processor (20) is configured to create at least one signal to be emitted by means of the senders (22) to an object, wherein the senders (22) are assigned to the waveform processor (20) such that the signal created is distributed to the senders (22), wherein the senders (22) are configured to adjust the signal created depending on the relative orientation and/or position of the respective sender (22) to the object, thereby generating individual signals, and wherein the senders (22) are configured to emit the individual signals towards the object in order to affect the object by a superposed signal of the individual signals, which is obtained at the position of the object, wherein each of the individual signals itself is insufficient to affect the object.

13. The system (18) according to claim 12, **characterized in that** each of the senders (22) has an antenna (23), in particular a directional antenna, and/or **in that** the system (18) comprises a receiving antenna (32) for receiving a signal of the at least one signal emitter and/or a user interface (28) enabling an operator of the system (18) to input information.

14. A test and measurement system (10) for testing robustness of a signal receiver (16), wherein the test and measurement system (10) comprises the system (18) according to claim 12 or 13, in particular wherein the test and measurement system (10) comprises a device under test (14) that is established by the signal receiver (16).
